# EUROPÄISCHE PATENTSCHRIFT

(11) **EP 2 637 143 B1**
(45) Veröffentlichungstag und Bekanntmachung des Hinweises auf die Patenterteilung: **18.06.2014**
(21) Anmeldenummer: 12158341.3
(22) Anmeldetag: 07.03.2012
(51) Int. Cl.: G07B 15/06, G08G 1/017

(54) **Verfahren zur Funkkommunikation zwischen einer Funkbake und einer Onboard-Unit sowie Funkbake und Onboard-Unit hierfür**
Method for radio communication between a wireless beacon and an on-board unit and wireless beacon and on-board unit for same
Procédé de communication radio entre un capteur radio et une unité embarquée ainsi que capteur radio et unité embarquée associée

(43) Veröffentlichungstag der Anmeldung: 11.09.2013
(73) Patentinhaber: Kapsch TrafficCom AG, 1120 Wien (AT)
(72) Erfinder: Povolny, Robert, 1190 Wien (AT); Güner, Refi-Tugrul, 2500 Baden (AT)
(74) Vertreter: Weiser, Andreas

(56) Entgegenhaltungen:
- EP-A2- 2 001 001
- DE-A1-102005 018 557
- US-A1- 2005 099 321
- US-A1- 2006 226 968

## Beschreibung

Die vorliegende Erfindung betrifft ein Verfahren zur selektiven Funkkommunikation zwischen einer Funkbake und einer Onboard-Unit eines die Funkbake passierenden Fahrzeugs. Die Erfindung betrifft ferner eine Funkbake und eine Onboard-Unit zur Durchführung dieses Verfahrens.

Funkbaken (Roadside-Units, RSU) und Onboard-Units (OBUs) dieser Art werden in infrastrukturgebundenen Straßenmaut- und -kommunikationssystemen verwendet. Diese Systeme beruhen auf einer Vielzahl geographisch verteilter ortsfester Funkbaken, die über Kurzreichweitenfunk mit Onboard-Units passierender Fahrzeuge kommunizieren, um diese auf den Ort ihres begrenzten Bakenfunkabdeckungsbereichs zu lokalisieren. Dadurch können z.B. Ortsnutzungen der Fahrzeuge bemautet oder diese mit ortsspezifischen Informationen versorgt werden, siehe z.B. EP 2 001 081 A2. Dabei ist es häufig wichtig, Funkkommunikation zwischen einer Funkbake und einer Onboard-Unit in ihrer Nähe einem ganz bestimmten Fahrzeug zuordnen zu können, beispielsweise zur Identifizierung des kommunizierenden Fahrzeugs in einem Kamerabild der Funkbake bei hoher Verkehrsdichte.

Zu diesem Zweck werden derzeit meist Funkbaken mit besonders kleinem, stark gerichtetem Funkabdeckungsgebiet eingesetzt, beispielsweise nach dem DSRC-Standard (dedicated short range communication), und jeder einzelnen Fahrspur einer mehrspurigen Straße dediziert zugeordnet. Wenn Funkbaken mit einem größeren Funkabdeckungsbereich, z.B. nach dem WAVE-Standard (wireless access in a vehicle environment), verwendet werden, sind zusätzliche fahrspurspezifische Identifikationseinrichtungen wie Fahrspurantennen, Funkpeilempfänger od.dgl. zur Fahrzeugzuordnung der Funkkommunikationen notwendig. Beide Varianten erfordern die fahrspurspezifische Montage von straßenseitiger Infrastruktur, was durch straßenüberspannende Montagebrücken ("gantries") oder straßenseitige Masten mit Montageauslegern bewerkstelligt wird. Solche Montagebrücken, -masten und -ausleger sind nicht nur überaus kostspielig in der Errichtung, sondern aufgrund ihrer massiven Ausbildung auch raumverbrauchend und nicht zuletzt unansprechend, insbesondere in Wohngebieten und Naturlandschaften.

Die Erfindung setzt sich zum Ziel, Verfahren und Vorrichtungen zur selektiven Funkkommunikation zwischen Funkbaken und Onboard-Units zu schaffen, welche die genannten Nachteile überwinden.

Dieses Ziel wird in einem ersten Aspekt der Erfindung mit einem Verfahren der eingangs genannten Art erreicht, umfassend:
in der Onboard-Unit: Ermitteln der aktuellen Bewegungsrichtung der Onboard-Unit und Senden einer Information darüber an die Funkbake;
in der Funkbake: Überprüfen, ob die in der Bewegungsrichtungsinformation angegebene Bewegungsrichtung innerhalb vorgegebener Grenzen liegt, und wenn ja, Durchführen einer Funkkommunikation mit der Onboard-Unit.

Die Erfindung beruht auf dem neuartigen Ansatz, die Bewegungsrichtung ("heading") einer sich im Funkabdeckungsbereich einer Funkbake bewegenden Onboard-Unit auszuwerten, um selektiv nur Funkkommunikationen mit solchen Onboard-Units durchzuführen, welche sich in einer bestimmten Richtung bewegen. Dadurch können Funkkommunikationen mit Onboard-Units auf Fahrspuren unterschiedlicher Fahrtrichtung voneinander unterschieden werden, ohne dass es dazu kostenaufwendiger, massiver, platzverzehrender und ortsbildverändernder Montagebauten bedürfte. Auch können Onboard-Units, die sich in einem unerwünschten Richtungsbereich bewegen, z.B. von Fahrzeugen des Querverkehrs, ignoriert und ausgeblendet werden.

Im Ergebnis werden auf einfache, kostengünstige und platzsparende Art und Weise selektive Funkkommunikationen zwischen einer Funkbake und Onboard-Units des fließenden Verkehrs erreicht, wodurch z.B. auch Funkbaken mit größeren Funkabdeckungsbereichen "gantry-los" einsetzbar sind, die auch landschaftsschonend versteckt angeordnet werden können.

Die Onboard-Unit kann ihre Bewegungsrichtungsinformation periodisch aussenden, damit Funkbaken auf ihrem Weg diese empfangen können. Beispielsweise kann die Onboard-Unit dazu sogenannte "common awareness messages" (CAMs) nach dem Standard ETSI ITS-G5 verwenden, welche alle 100 ms von der Onboard-Unit für benachbarte Verkehrsteilnehmer und Funkbaken ausgestrahlt werden.

Alternativ sendet die Onboard-Unit ihre Bewegungsrichtungsinformation nur dann, wenn sie eine Funkbake in ihrer Nähe detektiert, um größtmögliche Genauigkeit und Effizienz zu erzielen.

Das Detektieren einer Funkbake in der Nähe der Onboard-Unit kann auf alle in der Technik bekannten Arten erfolgen, beispielsweise mittels optischer Sensoren der Onboard-Unit, welche optische Markierungen oder das Aussehen einer Funkbake erkennen; durch Detektieren des Erreichens bekannter Orte von Funkbaken, wenn die Onboard-Unit z.B. mittels Satellitennavigation ihre Position selbst bestimmen kann, od.dgl. Bevorzugt sendet die Funkbake periodisch Kommunikationsaufforderungen aus, und das genannte Detektieren der Funkbake erfolgt durch Empfangen einer Kommunikationsaufforderung in der Onboard-Unit, wodurch keine Zusatzeinrichtungen der Onboard-Unit über ihre bereits bestehenden Kommunikationseinrichtungen hinaus erforderlich sind.

Bevorzugt sind die genannten vorgegebenen Grenzen ein oder mehrere Winkelbereiche von Himmelsrichtungen. Dadurch können Toleranzbereiche für zulässige Onboard-Unit-Bewegungen in bestimmten Himmelsrichtungen geschaffen und diesen selektive Funkkommunikationen zugeordnet werden.

Ein weiterer Vorteil des Verfahrens der Erfindung besteht darin, dass für das Aussenden der Kommunikationsaufforderung und Durchführen der Funkkommunikation in der Funkbake eine Rundstrahlantenne verwendet werden kann. Das Verfahren der Erfindung eignet sich damit besonders für WAVE-Funkbaken mit ungerichteten, großräumigen Funkabdeckungsbereichen, die parasitär mehrere Fahrbahnrichtungen, kreuzende Straßen usw. erfassen, um dabei selektiv Funkkommunikationen mit Onboard-Units auf bestimmten Straßenrichtungen durchzuführen.

Gemäß einer weiteren bevorzugten Ausführungsform der Erfindung kann von der Onboard-Unit zusätzlich ihre aktuelle Position ermittelt und an die Funkbake gesandt werden und in der Funkbake zusätzlich überprüft werden, ob auch die so empfangene Position innerhalb vorgegebener Grenzen liegt, und nur wenn auch dies zutrifft, die Funkkommunikation durchgeführt werden. Alternativ kann von der Funkbake die aktuelle Position der Onboard-Unit ermittelt und zusätzlich überprüft werden, ob die so ermittelte Position innerhalb vorgegebener Grenzen liegt, und nur wenn auch dies zutrifft, die Funkkommunikation durchgeführt werden. Dadurch können auch Onboard-Units, die sich in derselben Richtung bewegen, z.B. auf verschiedenen Fahrspuren derselben Fahrtrichtung, voneinander unterschieden werden.

Bevorzugt sendet die Onboard-Unit mit der Bewegungsrichtungsinformation eine eindeutige Funkkennung mit, welche zur Adressierung der Onboard-Unit in der Funkkommunikation verwendet wird. Dies ist bei höheren Verkehrsdichten von Vorteil, wenn sich mehrere Onboard-Units gleichzeitig im Funkabdeckungsbereich einer Funkbake bewegen.

Die Bewegungsrichtung und gegebenenfalls die Position der Onboard-Unit können auf verschiedenste in der Technik bekannte Arten ermittelt werden. Beispielsweise könnte die Onboard-Unit einen elektronischen Kompass enthalten, in einer vorgegebenen Lage zu den Rädern des Fahrzeugs auf dem Fahrzeug montiert sein und einen Geschwindigkeitsmesswert vom Tachometer des Fahrzeugs empfangen, sodass bei einer Geschwindigkeit größer Null aus der Kompassrichtung die Bewegungsrichtung der Onboard-Unit ermittelt werden kann. Bevorzugt erfolgt die Ermittlung mit Hilfe eines in der Onboard-Unit angeordneten Satellitennavigationsempfängers, welcher aus aufeinanderfolgenden Positionsbestimmungen ("position fixes") Bewegungsvektoren ("headings") und damit jeweils die aktuelle Bewegungsrichtung berechnen kann.

Das Verfahren der Erfindung eignet sich für alle Arten von Kurzreichweiten-Funkkommunikationen zwischen Funkbaken und Onboard-Units, z.B. nach dem genannten Standard DSRC. Besonders günstig ist die Anwendung für Funkkommunikationen nach dem WAVE-Standard, welcher für netzwerkartige Funkkommunikationen entwickelt wurde.

In vorteilhafter Weise sind die Funkbake und die Onboard-Unit Teil eines Straßenmautsystems und die Funkkommunikation wird zur Vermautung einer Straßennutzung der Onboard-Unit verwendet.

In einem zweiten Aspekt schafft die Erfindung eine Funkbake mit einem Sendeempfänger zur Funkkommunikation mit Onboard-Units passierender Fahrzeuge, welche dafür ausgebildet ist, von einer Onboard-Unit eine deren aktuelle Bewegungsrichtung angebende Information über Funk zu empfangen und zu überprüfen, ob die Bewegungsrichtung innerhalb vorgegebener Grenzen liegt, und nur wenn ja, die Funkkommunikation mit der Onboard-Unit durchzuführen.

In einem dritten Aspekt schafft die Erfindung eine Onboard-Unit zur Montage auf einem Fahrzeug, mit einem Sendeempfänger zur Funkkommunikation mit Funkbaken auf ihrem Weg sowie mit einem Prozessor und einer Einrichtung zur Ermittlung ihrer Bewegungsrichtung, welche dafür ausgebildet ist, bei Detektion einer Funkbake in ihrer Nähe ihre aktuelle Bewegungsrichtung zu ermitteln und eine Information darüber an die Funkbake zu senden.

Hinsichtlich weiterer Merkmale und Vorteile der erfindungsgemäßen Funkbake und Onboard-Unit wird auf die obigen Ausführungen zum Verfahren verwiesen.

Die Erfindung wird nachstehend anhand eines in den angeschlossenen Zeichnungen dargestellten Ausführungsbeispiels näher erläutert. In den Zeichnungen zeigt:
Fig. 1 eine beispielhafte Funkkommunikationssituation des Verfahrens und der Vorrichtungen der Erfindung in einer schematischen Perspektivansicht;
Fig. 2 die Bewegungsrichtungen der Kommunikationsteilnehmer von Fig. 1 dargestellt auf einer Windrose;
Fig. 3 eine weitere beispielhafte Funkkommunikationssituation des Verfahrens und der Vorrichtungen der Erfindung in einer schematischen Draufsicht;
Fig. 4 ein Blockschaltbild einer Onboard-Unit gemäß der Erfindung;
Fig. 5 ein Flussdiagramm einer ersten Ausführungsform des erfindungsgemäßen Verfahrens; und
Fig. 6 ein Flussdiagramm einer zweiten Ausführungsform des erfindungsgemäßen Verfahrens.

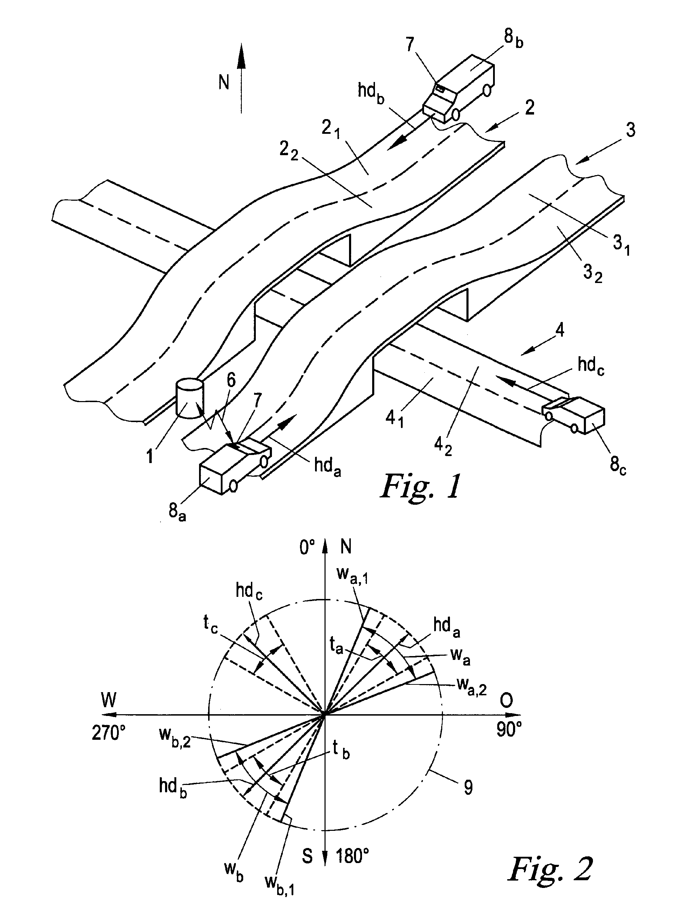

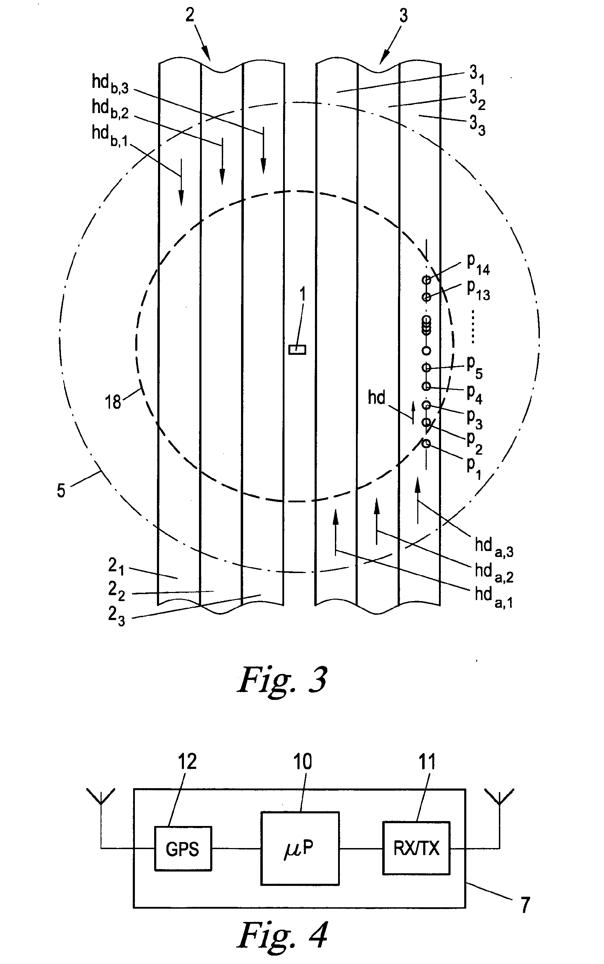

In den Fig. 1 und 3 ist eine Funkbake 1 gezeigt, die zwischen zwei Straßen 2, 3 mit verschiedenen Fahrspuren 2₁, 2₂, 2₃, 3₁, 3₂, 3₃ angeordnet ist. Eine etwa in rechtem Winkel kreuzende Querstraße 4 mit Fahrspuren 4₁, 4₂ ist beispielhaft in Fig. 1 gezeigt.

Die Funkbake 1 verfügt über einen (oder mehrere) Sendeempfänger (Transceiver) mit einem Funkabdeckungsbereich 5, in dem sie Funkkommunikationen 6 mit Onboard-Units (OBUs) 7 unterhalten kann, welche von die Funkbake 1 passierenden Fahrzeugen 8ₐ, 8_{b}, 8_{c} mitgeführt werden. Der Funkabdeckungsbereich 5 kann ungerichtet um die Funkbake 1 herum verteilt sein, z.B. wenn diese eine Rundstrahlantenne hat. Alternativ kann die Antennencharakteristik der Funkbake 1 auch gerichtet sein, z.B. auf eine oder mehrere der Straßen 2 - 4 bzw. deren Fahrspuren beschränkt. Das im weiteren geschilderte Verfahren befasst sich mit der Situation, dass der Funkabdeckungsbereich 5 von Fahrzeugen 8ₐ, 8_{b}, 8_{c} mit unterschiedlichen Bewegungsrichtungen ("headings") hdₐ, hd_{b}, hd_{c} gequert werden kann. Die Bewegungsrichtungen hdₐ, hd_{b}, hd_{c} der beispielhaften Fahrzeuge sind in Fig. 2 zur Veranschaulichung in einer Windrose (Kompassrose) 9 in Bezug auf die Himmelsrichtungen Norden (0°), Osten (90°), Süden (180°) und Westen (270°) eingetragen.

Das im folgenden geschilderte Verfahren, welches zum Teil in der Funkbake 1 und zum Teil in den Onboard-Units 7 abläuft, dient dazu, Funkkommunikationen 6 selektiv mit Onboard-Units 7 bestimmter Bewegungsrichtungen hdₐ, hd_{b}, hd_{c} durchzuführen. Dies ermöglicht es der Funkbake 1, beispielsweise nur mit Onboard-Units 7 zu kommunizieren, die zu Fahrzeugen 8ₐ auf der Straße 3 gehören, oder aber zu Fahrzeugen 8_{b} auf der Straße 2, und beispielsweise keinesfalls mit Onboard-Units 7, die von Fahrzeugen 8_{c} auf der Querstraße 4 mitgeführt werden. Zu diesem Zweck werden speziell ausgerüstete Onboard-Units 7 eingesetzt, deren Aufbau in Fig. 4 schematisch gezeigt ist.

Gemäß Fig. 4 verfügen die Onboard-Units 7 über einen zentralen Prozessor 10, einen Sendeempfänger 11 zur Funkkommunikation mit der Funkbake 1 und eine Einrichtung 12 zur Ermittlung ihrer Bewegungsrichtung hdₐ, hd_{b}, hd_{c} (allgemein "hd") in einem Referenzsystem wie der Windrose 9. Optional kann die Einrichtung 12 zusätzlich zur Bestimmung der jeweils aktuellen Position pᵢ der Onboard-Unit 7 in einem Referenzsystem, z.B. einem Weltkoordinatensystem oder dem Funkabdeckungsbereich 5, verwendet werden.

Die Einrichtung 12 ist beispielsweise ein Satellitennavigationsempfänger für ein globales Satellitennavigationssystem (global satellite navigation system, GNSS) wie GPS, GLONASS, Galileo usw., und bestimmt fortlaufend bzw. periodisch oder auch nur auf Anforderung durch den Prozessor 10 aktuelle Positionen ("position fixes") pᵢ, pᵢ₊₁, pᵢ₊₂ usw. Aus zwei zu aufeinanderfolgenden Zeitpunkten tᵢ, tᵢ₊₁ bestimmten Positionen pᵢ, pᵢ₊₁ kann die Einrichtung 12 dann in bekannter Weise durch Differenzbildung pᵢ₊₁ - pᵢ einen jeweils aktuellen Bewegungsvektor als Bewegungsrichtung hd der Onboard-Unit 7 im Referenzsystem 9 bestimmen.

Alternativ könnte die Einrichtung 12 beispielsweise einen elektronischen Kompass (Magnetfeldsensor) enthalten und zusätzlich von einem Geschwindigkeitsmesser (Tachometer) des Fahrzeugs 8 einen Geschwindigkeitsmesswert empfangen. In Kenntnis einer vorgegebenen Montagelage der Onboard-Unit 7 auf dem Fahrzeug 8, genauer bezüglich der Abrollrichtung der Räder des Fahrzeugs 8, kann dann bei einer Geschwindigkeit ungleich Null die in Räder-Abrollrichtung abgelesene Kompassrichtung als Bewegungsrichtung hd der Onboard-Unit 7 im Referenzsystem 9 bestimmt werden.

Wenn die Onboard-Unit 7 beispielsweise vom Benutzer im Fahrzeug 8 angebracht wird, z.B. durch Ankleben an die Windschutzscheibe, könnte eine solche kompassbasierte Einrichtung 12 mit einer einfachen Kalibrierfahrt, z.B. indem der Benutzer nach Norden fährt und dabei einen entsprechenden Kalibrierknopf der Onboard-Unit 7 drückt, "genordet" werden, um auch bei unterschiedlichen Montagelagen der Onboard-Unit 7 bezüglich der Abrollrichtung der Räder des Fahrzeugs 8 stets eine korrekte Bewegungsrichtung hd im Referenzsystem 9 zu ermitteln.

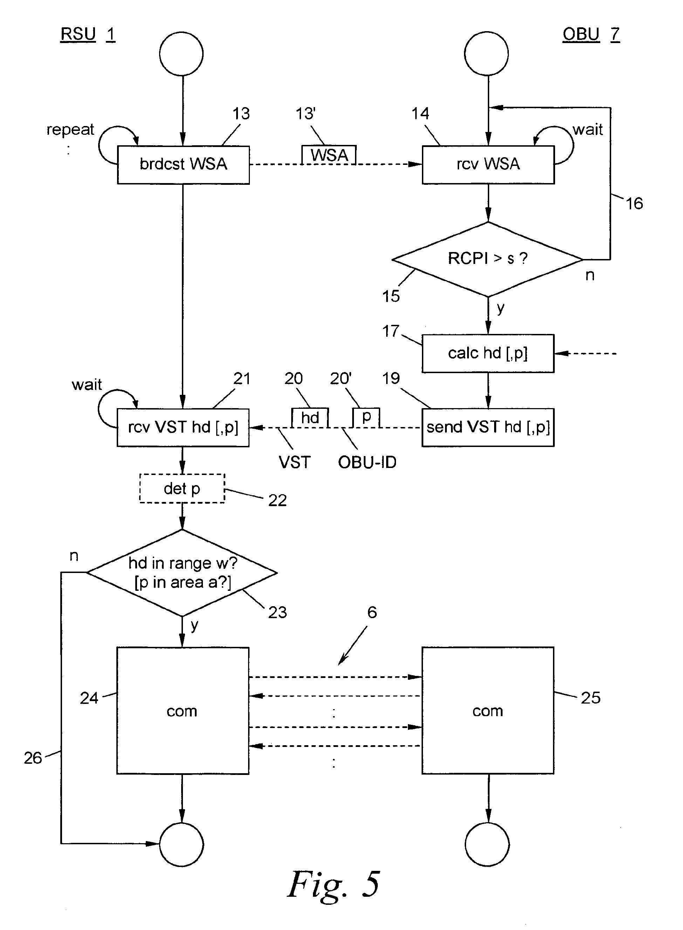

Die solcherart ermittelte Bewegungsrichtung hd wird in weiterer Folge von der Onboard-Unit 7 in einer Vorphase der Funkkommunikation 6 an die Funkbake 1 gesandt, welche abhängig von der Bewegungsrichtung hd entscheidet, ob die Funkkommunikation 6 durchgeführt wird oder nicht. Fig. 5 zeigt den Ablauf dieses Verfahrens im Detail. Die linke Hälfte von Fig. 5 zeigt den in der Funkbake 1 ablaufenden Teil des Verfahrens und die rechte Hälfte den in der Onboard-Unit 7 ablaufenden Teil des Verfahrens. Fig. 3 zeigt dazu einige beispielhafte Positionen pᵢ (p₁, p₂,... p₁₄), welche die Onboard-Unit 7 im Verlauf des Verfahrens von Fig. 5 bei der Durchfahrt des Funkabdeckungsbereichs 5 der Funkbake 1 einnimmt.

Fig. 5 beschreibt das Verfahren beispielhaft anhand von zwischen Funkbake 1 und Onboard-Unit 7 ausgetauschten Nachrichten nach dem WAVE-Standard IEEE 802.11p. Das beschriebene Verfahren eignet sich jedoch auch für alle anderen Arten von Nachrichten- und Funkkommunikationsstandards, z.B. andere WAVE-, ITS-G5- oder CEN-DSRC-Standards, RFID (radio frequency identification), Bluetooth^{®}, WLAN (wireless local area network) oder vergleichbare Standards.

Gemäß Fig. 5 sendet die Funkbake 1 in einem ersten (bzw. im Hintergrund auch permanent laufenden) Schritt 13 zumindest eine (bevorzugt mehrere periodisch wiederholte) Kommunikationsaufforderungen 13' in ihrem Funkabdeckungsbereich 5 aus. Die Kommunikationsaufforderung 13' ist z.B. ein sog. "WAVE service announcement" (WSA) nach dem WAVE-Standard. Die Kommunikationsaufforderung 13' wird von einer in den Funkabdeckungsbereich 5 eintretenden Onboard-Unit 7 empfangen, siehe Schritt 14, welche z.B. in Empfangsbereitschaft dafür war.

Der Prozessor 10 und Sendeempfänger 11 der Onboard-Unit 7 können so programmiert sein, dass sie nur auf solche Kommunikationsaufforderungen 13' reagieren, deren Empfangssignalstärke (im WAVE-Standard: das Maß "received channel power indicator", RCPI) einen vorgegebenen Schwellwert s überschreitet, siehe Entscheidungsschritt 15. Falls eine beim Betreten des Funkabdeckungsbereichs 5 empfangene Kommunikationsaufforderung 13' den Schwellwert s nicht überschreitet (Zweig "n"), wird erneut zum "Warten auf Empfang und Empfangen"-Schritt 14 zurückverzweigt (Schleife 16). Sobald eine Kommunikationsaufforderung 13' empfangen wurde, deren Empfangssignalstärke RCPI den Schwellwert s übersteigt, wird zu Schritt 17 vorangegangen (Zweig "y").

Fig. 3 zeigt dazu beispielhaft eine erste Position p₁, zu der sich die Onboard-Unit 7 bei Durchlaufen der Schleife 16 befindet, und eine zweite Position p₂, an welcher sie einen Bereich 18 der Schwellwertüberschreitung RCPI > s betreten hat und zum Schritt 17 übergegangen worden ist.

Anstatt dass die Onboard-Unit 7 eine Funkbake 1 aufgrund einer von dieser ausgestrahlten Kommunikationsaufforderung 13' detektiert, könnte die Onboard-Unit 7 das Auftreten einer Funkbake 1 in ihrer Nähe, d.h. das Betreten des Nahbereichs 5 bzw. Schwellwertüberschreitungsbereichs 18, auch auf andere Weise detektieren, z.B. durch optisches Erkennen des Aussehens oder optischer Markierungen der Funkbake 1 mittels einer Kamera der Onboard-Unit 7; durch Vergleichen ihrer aktuellen Position pᵢ (siehe nachstehend) mit einer Liste vorgegebener bzw. bekannter Orte von Funkbaken 1, usw. usf. Optional könnte die Funkbake 1 ihre Kommunikationsaufforderung 13' auch erst als Reaktion auf "umgekehrte" Kommunikationsaufforderungen (nicht dargestellt) der Onboard-Unit 7 aussenden, welche diese periodisch ausstrahlt.

In Schritt 17 bestimmt die Onboard-Unit 7 ihre aktuelle Bewegungsrichtung hd mit Hilfe der Einrichtung 12, beispielsweise durch "position fix tracking" zwischen zwei kurzfristig aufeinanderfolgenden Positionen p₂ und p₃. Die Bewegungsrichtung hd wird beispielsweise im Bezugssystem der Windrose 9 als Himmelsrichtung in Grad, z.B. 45° für Nordosten, angegeben. Optional kann in Schritt 17 zusätzlich zur Bewegungsrichtung hd auch die aktuelle Position pᵢ bzw. allgemein p, hier z.B. eine der Positionen p₂ oder p₃, ermittelt werden. Schritt 17 kann auch kontinuierlich bzw. periodisch im Hintergrund in der Onboard-Unit 7 ablaufen.

Anschließend sendet die Onboard-Unit 7 im Schritt 19 die so ermittelte Bewegungsrichtung hd in Form einer Bewegungsrichtungsinformation 20 und - optional - die so ermittelte Position p in Form einer Positionsinformation 20' über ihren Sendeempfänger 11 an die Funkbake 1, welche darauf in einem Schritt 21 gewartet hat. Die Onboard-Unit 7 befindet sich dabei z.B. an Position p₄ (Fig. 3).

Die Übermittlung der Bewegungsrichtungsinformation 20 und optional der Positionsinformation 20' im Schritt 19 kann beispielsweise in Form einer VST-Nachricht ("vehicle service table message") des WAVE-Standards erfolgen, oder unmittelbar im Anschluss an eine solche VST-Nachricht, oder in einem anderen standardkonformen Nachrichtenformat, beispielsweise in Form einer "MSG_ProbeVehicleData"-Nachricht des Standards IEEE 802.11p. Dadurch ist keine Modifikation des Übertragungsstandards auf der Funkschnittstelle zwischen Funkbake 1 und Onboard-Unit 7 erforderlich.

Bereits mit der VST-Nachricht und/oder mit der Bewegungseinrichtungsinformation 20 und/oder mit allen weiteren Datenpaketen sendet die Onboard-Unit 7 bevorzugt auch eine sie identifizierende Kennung OBU-ID mit, welche von der Funkbake 1 dazu verwendet werden kann, mehrere Onboard-Units 7 und mit diesen unterhaltene Funkkommunikationen 6 voneinander zu unterscheiden. Anstatt dass die Onboard-Unit 7 in Schritt 19 ihre aktuelle Position p sendet, kann die Funkbake 1 in einem optionalen Schritt 22 die Position p der Onboard-Unit 7 ermitteln, beispielsweise durch Funkpeilung oder herkömmliche Positionsbestimmungseinrichtungen wie Lichtschranken, Scanner, Kameras od.dgl.

Anschließend überprüft die Funkbake 1 im Schritt 23, ob die in der empfangenden Bewegungsrichtungsinformation 20 angegebene Bewegungsrichtung hd innerhalb vorgegebener Grenzen ("range") w liegt. Die Grenzen w definieren jene Bewegungsrichtungen hd, die Onboard-Units 7 haben müssen, damit die Funkbake 1 mit ihnen eine Funkkommunikation 6 durchführt. Die genannten Grenzen w können durch einen (oder mehrere) Winkelbereiche wₐ, w_{b} (Fig. 2) angegeben werden, welche wiederum z.B. durch obere und untere Grenzwinkel w_{a,1,} w_{a,2}, w_{b,1}, w_{b,2} definiert werden. Die Winkelbereiche w_{a,} w_{b} werden dabei bevorzugt so groß gewählt, dass sie Messtoleranzen der Onboard-Unit 7 bei der Bestimmung ihrer Bewegungsrichtung hd aufnehmen können, z.B. Toleranzbereiche tₐ bzw. t_{b} von ±5° der Richtungen hdₐ, hd_{b} der Onboard-Units 7 der Fahrzeuge 8a bzw. 8b. Die in Fig. 2 gezeigten Winkelbereiche w_{a,} w_{b} sind so definiert, dass sie nur Funkkommunikationen 6 mit Onboard-Units 7 auf den Straßen 2, 3 ermöglichen und voneinander unterscheiden lassen und Funkkommunikationen mit Onboard-Units 7 auf der Straße 4 blockieren

Optional kann in Schritt 23 zusätzlich überprüft werden, ob auch die weitere Bedingung, dass die Position p der Onboard-Unit 7 innerhalb vorgegebener Grenzen ("area") a liegt, erfüllt ist. Die vorgegebenen Grenzen a für die Überprüfung der Position p können beispielsweise die geographischen Umrisse einer bestimmten Fahrspur 2₁, 2₂, 2₃, 3₁, 3₂, 3₃, 3₃ sein, um z.B. auch Onboard-Units 7 derselben Bewegungsrichtung hd auf unterschiedlichen Fahrspuren 2₁ voneinander unterscheiden zu können.

Geht die Überprüfung "hd in range w?" - und optional auch zusätzlich die Überprüfung "p in area a?" - in Schritt 23 positiv aus (Zweig "y"), führt die Funkbake 1 im Schritt 24 die Funkkommunikation 6 mit der Onboard-Unit 7 durch. Die Onboard-Unit 7 führt dabei einen zum Schritt 24 komplementären Kommunikationsschritt 25 aus. Während des Ablaufs der Funkkommunikation 6 in den Schritten 24/25 bewegt sich die Onboard-Unit 7 z.B. fortschreitend von der Position p₅ bis zur Position p₁₄, bis die Funkkommunikation 6 abgeschlossen ist.

Im Zuge der Funkkommunikation 6 werden in an sich bekannter Weise Datenpakete zwischen der Funkbake 1 und der Onboard-Unit 7 hin und her geschickt, welche Datenpakete beispielsweise neben der Onboard-Unit-Kennung OBU-ID noch weitere Kennungen der Onboard-Unit 7 und/oder ihres Fahrzeugs 8, Informationen über Mautparameter, ihre Bewegungshistorie, anwendbare Mauttarife usw. umfassen. Auf Grundlage der Funkkommunikation 6 können z.B. Mauttransaktionen in den Funkbaken 1 erzeugt und an eine Zentrale eines Straßenmautsystems gesandt werden, Gebührenabbuchungen in einer "elektronischen Geldbörse" in der Onboard-Unit 7 durchgeführt werden, od. dgl.

Wenn im Überprüfungsschritt 23 der Funkbake 1 der Vergleich "hd in range w?" (oder optional der Vergleich "p in area a?") negativ ausgeht (Zweig "n"), wird der Kommunikationsschritt 24 übersprungen (Pfeil 26), und die Funkkommunikation 6 mit der Onboard-Unit 7 unterbleibt. Dadurch werden beispielsweise keine Funkkommunikation 6 mit Onboard-Units 7 von Fahrzeugen 8_{c} durchgeführt, deren Bewegungsrichtung hd_{c} - unter Berücksichtung der Toleranzgrenze t_{c} - nicht in einen der Bereiche wₐ, w_{b} von zulässigen Bewegungsrichtungen fällt, d.h. solche Onboard-Units 7 werden ignoriert.

Optional kann in der Onboard-Unit 7 nach der Funkkommunikation 6 von Schritt 25 - aber auch, wenn diese unterbleibt, d.h. bereits nach dem Sendeschritt 19 - eine Karenz- bzw. Sperrzeit aktiviert werden, während der die Onboard-Unit 7 nicht nochmals auf eine Kommunikationsaufforderung 13' reagiert. Damit kann verhindert werden, dass ein und dieselbe Onboard-Unit 7 im Funkabdeckungsbereich 9, insbesondere im Schwellwertüberschreitungsbereich 18, mehr als einmal ihre Bewegungsrichtung hd einer Funkbake 1 mitteilt und damit den Funkkanal unnötig blockiert.

Es versteht sich, dass die Funkbake 1 nicht notwendigerweise ortsfest bzw. straßenseitig aufgestellt sein muss, sondern beispielsweise auch auf einem mobilen Kontrollfahrzeug angeordnet sein kann. Die Grenzen w, innerhalb deren sie mit Onboard-Units 7 passierender Fahrzeuge 8 kommuniziert, können dementsprechend auch auf ihre eigene Fahrtrichtung, d.h. ein lokales Koordinatensystem der sich bewegenden Funkbake 1, bezogen sein.

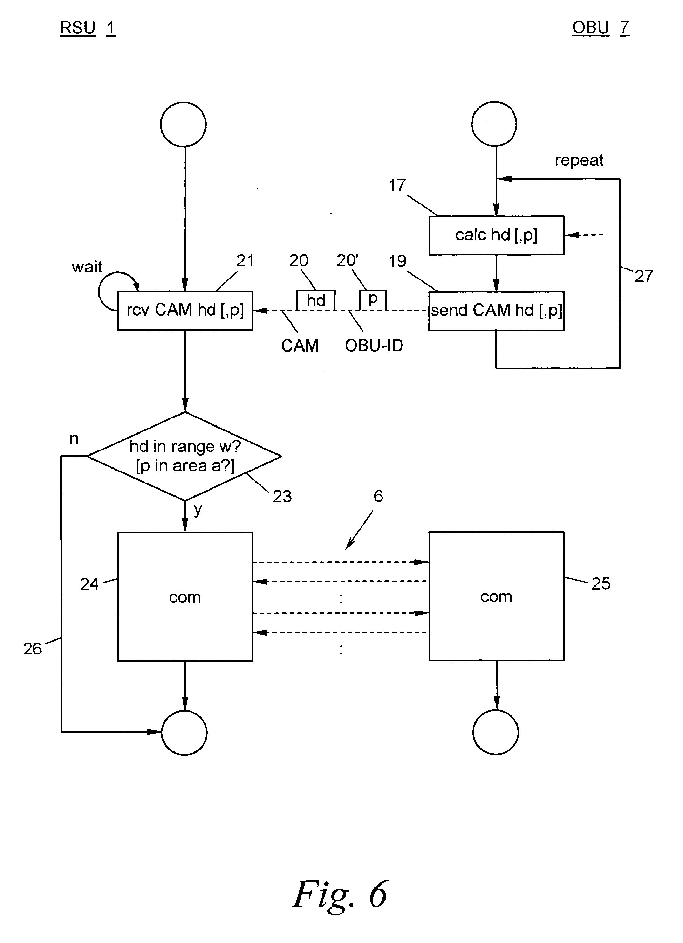

Fig. 6 zeigt eine alternative Ausführungsform des Verfahrens von Fig. 5, wobei gleiche Bezugszeichen gleiche Elemente wie in Fig. 5 bezeichnen. Bei der Ausführungsform von Fig. 6 sendet die Onboard-Unit 7 ihre Bewegungsrichtungsinformation 20 fortlaufend, z.B. periodisch. Die Schritte 17 und 19 werden in einer Schleife 27 wiederholt; z.B. alle 100 ms. Sobald eine Funkbake 1 die Bewegungsrichtungsinformation 20 einer Onboard-Unit 7 empfängt (Schritt 21), entscheidet sie wieder im Schritt 23, ob sie die Funkkommunikation 6 mit dieser Onboard-Unit 7 durchführen möchte (Schritte 24/25) oder nicht (Pfeil 26).

In dem in Fig. 6 gezeigten Beispiel erfolgt die Übermittlung der Bewegungsrichtungsinformation 20 (und optional der Positionsinformation 20') im Schritt 19 beispielsweise in Form einer sog. CAM-Nachricht ("common awareness message") nach dem ETSI-Standard ITS-G5. Derartige CAM-Nachrichten werden beispielsweise alle 100 ms von einer ITS-G5-Onboard-Unit 7 zur Information umliegender Verkehrsteilnehmer ausgesandt und können dabei gleich die Bewegungsrichtungsinformation 20 (und optional die Positionsinformation 20') enthalten und von einer Funkbake 1 auf dem Weg der Onboard-Unit 7 in der geschilderten Weise ausgewertet werden, um selektiv Funkkommunikationen 6 mit Onboard-Units 7 bestimmter Bewegungsrichtung hd durchzuführen.

Die Erfindung ist nicht auf die dargestellten Ausführungsformen beschränkt, sondern umfasst alle Varianten und Modifikationen, die in den Rahmen der angeschlossenen Ansprüche fallen.

## Patentansprüche

1. Verfahren zur selektiven Funkkommunikation (6) zwischen einer Funkbake (1) und einer Onboard-Unit (7) eines die Funkbake (1) passierenden Fahrzeugs (8), umfassend:
in der Onboard-Unit (7): Ermitteln (17) der aktuellen Bewegungsrichtung (hd) der Onboard-Unit (7) und Senden (19) einer Bewegungsrichtungsinformation (20) darüber an die Funkbake (1);
in der Funkbake (1) : Überprüfen (23), ob die in dieser Bewegungsrichtungsinformation (20) angegebene Bewegungsrichtung (hd) innerhalb vorgegebener Grenzen (w) liegt, und wenn ja, Durchführen (24) einer Funkkommunikation (6) mit der Onboard-Unit (7) .

2. Verfahren nach Anspruch 1, **dadurch gekennzeichnet, dass** die Onboard-Unit (7) ihre Bewegungsrichtungsinformation (20) periodisch aussendet.

3. Verfahren nach Anspruch 1, **dadurch gekennzeichnet, dass** die Onboard-Unit (7) ihre Bewegungsrichtungsinformation (20) sendet, wenn sie eine Funkbake (1) in ihrer Nähe detektiert.

4. Verfahren nach Anspruch 3, **dadurch gekennzeichnet, dass** die Funkbake (1) periodisch Kommunikationsaufforderungen (13') aussendet (13), und dass das genannte Detektieren der Funkbake (1) durch Empfangen (14) einer Kommunikationsaufforderung (13') in der Onboard-Unit (7) erfolgt.

5. Verfahren nach einem der Ansprüche 1 bis 4, **dadurch gekennzeichnet, dass** die vorgegebenen Grenzen (w) ein oder mehrere Winkelbereiche (wₐ, w_{b}) von Himmelsrichtungen sind.

6. Verfahren nach einem der Ansprüche 1 bis 5, **dadurch gekennzeichnet, dass** für das Aussenden (13) der Kommunikationsaufforderung (13') und Durchführen (24) der Funkkommunikation (6) in der Funkbake (1) eine Rundstrahlantenne verwendet wird.

7. Verfahren nach einem der Ansprüche 1 bis 6, **dadurch gekennzeichnet, dass** von der Onboard-Unit (7) zusätzlich ihre aktuelle Position (p) ermittelt und an die Funkbake (1) gesandt wird, und dass in der Funkbake (1) zusätzlich überprüft wird, ob auch die so empfangene Position (p) innerhalb vorgegebener Grenzen (a) liegt, und nur wenn auch dies zutrifft, die Funkkommunikation (6) durchgeführt wird.

8. Verfahren nach einem der Ansprüche 1 bis 7, **dadurch gekennzeichnet, dass** von der Funkbake (1) die aktuelle Position (p) der Onboard-Unit (7) ermittelt und zusätzlich überprüft wird, ob die so ermittelte Position (p) innerhalb vorgegebener Grenzen (a) liegt, und nur wenn auch dies zutrifft, die Funkkommunikation (6) durchgeführt wird.

9. Verfahren nach einem der Ansprüche 1 bis 8, **dadurch gekennzeichnet, dass** die Onboard-Unit (7) mit der Bewegungsrichtungsinformation (20) eine eindeutige Funkkennung (OBU-ID) mitsendet, welche zur Adressierung der Onboard-Unit (7) in der Funkkommunikation (6) verwendet wird.

10. Verfahren nach einem der Ansprüche 1 bis 9, **dadurch gekennzeichnet, dass** die Bewegungsrichtung (hd) und gegebenenfalls die Position (p) der Onboard-Unit (7) mit Hilfe eines in der Onboard-Unit (7) angeordneten Satellitennavigationsempfängers (12) ermittelt werden.

11. Verfahren nach einem der Ansprüche 1 bis 10, **dadurch gekennzeichnet, dass** die Kommunikationsaufforderung (13') und die Bewegungsrichtungsinformation (20) als Nachrichten nach dem WAVE-Standard gesendet werden.

12. Verfahren nach einem der Ansprüche 1 bis 11, **dadurch gekennzeichnet, dass** die Funkbake (1) und die Onboard-Unit (7) Teil eines Straßenmautsystems sind und die Funkkommunikation (6) zur Vermautung einer Straßennutzung der Onboard-Unit (7) verwendet wird.

13. Funkbake mit einem Sendeempfänger zur Funkkommunikation mit Onboard-Units passierender Fahrzeuge, **dadurch gekennzeichnet, dass** sie dafür ausgebildet ist, von einer Onboard-Unit (7) eine deren aktuelle Bewegungsrichtung (hd) angebende Information (20) über Funk zu empfangen (21) und zu überprüfen (23), ob die Bewegungsrichtung (hd) innerhalb vorgegebener Grenzen (w) liegt, und nur wenn ja, die Funkkommunikation (6) mit der Onboard-Unit (7) durchzuführen.

14. Funkbake nach Anspruch 13, **dadurch gekennzeichnet, dass** die vorgegebenen Grenzen (w) ein Winkelbereich (wₐ, w_{b}) von Himmelsrichtungen sind.

15. Funkbake nach Anspruch 13 oder 14, **dadurch gekennzeichnet, dass** sie für den genannten Funkempfang (21) und die genannte Funkkommunikation (6) eine Rundstrahlantenne hat.

16. Funkbake nach einem der Ansprüche 13 bis 15, **dadurch gekennzeichnet, dass** sie dafür ausgebildet ist, die aktuelle Position (p) der Onboard-Unit (7) zu ermitteln (22) und zusätzlich zu überprüfen (23), ob die so ermittelte Position (p) innerhalb vorgegebener Grenzen (a) liegt, und nur wenn auch dies zutrifft, die Funkkommunikation (6) durchzuführen.

17. Funkbake nach einem der Ansprüche 13 bis 16, **dadurch gekennzeichnet, dass** sie periodisch Kommunikationsaufforderungen (13') aussendet (13), um damit Onboard-Units (7) in ihrer Nähe zur Funkübersendung (19) ihrer Bewegungsrichtung (hd) aufzufordern.

18. Funkbake nach einem der Ansprüche 13 bis 17, **dadurch gekennzeichnet, dass** sie eine mit der Bewegungsrichtungsinformation (20) empfangene Funkkennung (OBU-ID) der Onboard-Unit (7) verwendet, um die Funkkommunikation (6) an diese Onboard-Unit (7) zu adressieren.

19. Onboard-Unit zur Montage auf einem Fahrzeug, mit einem Sendeempfänger (11) zur Funkkommunikation (6) mit Funkbaken (1) auf ihrem Weg sowie mit einem Prozessor (10) und einer Einrichtung (12) zur Ermittlung ihrer Bewegungsrichtung (hd), **dadurch gekennzeichnet, dass** sie dafür ausgebildet ist, bei Detektion einer Funkbake (1) in ihrer Nähe ihre aktuelle Bewegungsrichtung (hd) zu ermitteln (17) und eine Bewegungsrichtungsinformation (20) darüber an die Funkbake (1) zu senden.

20. Onboard-Unit nach Anspruch 19, **dadurch gekennzeichnet, dass** sie dafür ausgebildet ist, die Funkbake (1) durch Empfangen (14) einer Kommunikationsaufforderung (13') der Funkbake (1) zu detektieren.

21. Onboard-Unit nach Anspruch 19 oder 20, **dadurch gekennzeichnet, dass** sie eine eindeutige Funkkennung (OBU-ID) hat, welche sie mit der Bewegungsrichtungsinformation (20) mitsendet.

22. Onboard-Unit nach einem der Ansprüche 19 bis 21, **dadurch gekennzeichnet, dass** sie ferner eine Einrichtung (12) zur Ermittlung ihrer Position (p) aufweist und dafür ausgebildet ist, mit der Bewegungsrichtungsinformation (20) auch ihre Position (p) mitzusenden.

23. Onboard-Unit nach einem der Ansprüche 19 bis 22, **dadurch gekennzeichnet, dass** die Einrichtung (12) zur Ermittlung der Bewegungsrichtung (hd) und/oder Position (p) ein Satellitennavigationsempfänger ist.

24. Onboard-Unit nach einem der Ansprüche 19 bis 23, **dadurch gekennzeichnet, dass** der Sendeempfänger (11) nach dem WAVE-Standard arbeitet und die Bewegungsrichtungsinformation (20) im Anschluß an eine VST-Nachricht sendet.

## Claims

1. A method for the selective radio communication (6) between a radio beacon (1) and an onboard unit (7) of a vehicle (8) passing the radio beacon (1), comprising:
in the onboard unit (7): determining (17) the current heading (hd) of the onboard unit (7) and transmitting (19) heading information (20) thereon to the radio beacon (1);
in the radio beacon (1): checking (23) whether the heading (hd) indicated in this heading information (20) is within predetermined boundaries (w), and if so, carrying out (24) a radio communication (6) with the onboard unit (7).

2. The method according to claim 1, **characterized in that** the onboard unit (7) periodically emits the heading information (20) thereof.

3. The method according to claim 1, **characterized in that** the onboard unit (7) transmits the heading information (20) thereof when the onboard unit detects a radio beacon (1) in the vicinity.

4. The method according to claim 3, **characterized in that** the radio beacon (1) periodically emits (13) communication requests (13'), and the aforementioned detection of the radio beacon (1) takes place by receiving (14) a communication request (13') in the onboard unit (7).

5. The method according to any one of claims 1 to 4, **characterized in that** the predetermined boundaries (w) are one or more angular ranges (wₐ, w_{b}) of geographical directions.

6. The method according to any one of claims 1 to 5, **characterized in that** an omnidirectional antenna is used for emitting (13) the communication request (13') and carrying out (24) the radio communication (6) in the radio beacon (1).

7. The method according to any one of claims 1 to 6, **characterized in that** the onboard unit (7) additionally determines the current position (p) thereof and transmits this to the radio beacon (1), and the radio beacon (1) additionally checks whether the position (p) thus received is within predetermined boundaries (a), and carries out the radio communication (6) only if this is the case.

8. The method according to any one of claims 1 to 7, **characterized in that** the radio beacon (1) determines the current position (p) of the onboard unit (7) and additionally checks whether the position (p) thus determined is within predetermined boundaries (a), and carries out the radio communication (6) only if this is the case.

9. The method according to any one of claims 1 to 8, **characterized in that** the onboard unit (7) sends a unique radio identifier (OBU-ID) together with the heading information (20), the identifier being used to address the onboard unit (7) in the radio communication (6).

10. The method according to any one of claims 1 to 9, **characterized in that** the direction of movement (hd), and optionally the position (p) of the onboard unit (7), are determined using a satellite navigation receiver (12) arranged in the onboard unit (7).

11. The method according to any one of claims 1 to 10, **characterized in that** the communication request (13') and the heading information (20) are transmitted as messages according to the WAVE standard.

12. The method according to any one of claims 1 to 11, **characterized in that** the radio beacon (1) and the onboard unit (7) are part of a road toll system, and the radio communication (6) is used to impose tolls for road usage by the onboard unit (7).

13. A radio beacon comprising a transceiver for radio communication with onboard units of passing vehicles, **characterized by** being configured to receive (21) information (20) from an onboard unit (7) indicating the current heading (hd) thereof via radio and to check (23) whether the heading (hd) is within predetermined boundaries (w), and to carry out the radio communication (6) with the onboard unit (7) only if this is the case.

14. The radio beacon according to claim 13, **characterized in that** the predetermined boundaries (w) are an angular range (wₐ, w_{b}) of geographical directions.

15. The radio beacon according to claim 13 or 14, **characterized by** comprising an omnidirectional antenna for the aforementioned radio reception (21) and the aforementioned radio communication (6).

16. The radio beacon according to any one of claims 13 to 15, **characterized by** being configured to determine (22) the current position (p) of the onboard unit (7) and additionally to check (23) whether the position (p) thus determined is within predetermined boundaries (a), and to carry out the radio communication (6) only if this is the case.

17. The radio beacon according to any one of claims 13 to 16, **characterized by** periodically emitting (13) communication requests (13') so as to prompt onboard units (7) in the vicinity thereof to transmit via radio (19) the headings (hd) thereof.

18. The radio beacon according to any one of claims 13 to 17, **characterized in that** it uses a radio identifier (OBU-ID) of the onboard unit (7) that is received together with the heading information (20), so as to address the radio communication (6) to this onboard unit (7).

19. An onboard unit for mounting on a vehicle, comprising a transceiver (11) for radio communication (6) with radio beacons (1) along the way, and further comprising a processor (10) and a device (12) for determining the heading (hd) thereof, **characterized by** being configured to determine (17) the current heading (hd) when a radio beacon (1) is detected in the vicinity thereof, and to transmit heading information (20) thereon to the radio beacon (1).

20. The onboard unit according to claim 19, **characterized by** being configured to detect the radio beacon (1) by receiving (14) a communication request (13') from the radio beacon (1).

21. The onboard unit according to claim 19 or 20, **characterized by** having a unique radio identifier (OBU-ID), which the onboard unit transmits together with the heading information (20).

22. The onboard unit according to any one of claims 19 to 21, **characterized by** further comprising a device (12) for determining the position (p) thereof and being configured to transmit the position (p) thereof together with the heading information (20).

23. The onboard unit according to any one of claims 19 to 22, **characterized in that** the device (12) for determining the heading (hd) and/or position (p) is a satellite navigation receiver.

24. The onboard unit according to any one of claims 19 to 23, **characterized in that** the transceiver (11) operates according to the WAVE standard and transmits the heading information (20) following a VST message.

## Revendications

1. Procédé de communication radio sélective (6) entre une balise radio (1) et une unité embarquée (7) d'un véhicule (8) passant la balise radio (1), comprenant :
dans l'unité embarquée (7) : la détermination (17) de la direction de déplacement (hd) actuelle de l'unité embarquée (7) et la transmission (19) à la balise radio (1) d'une information de direction de déplacement (20) relative à la direction de déplacement actuelle ;
dans la balise radio (1) : la vérification (23) si la direction de déplacement (hd) indiquée dans cette information de direction de déplacement (20) est située dans des limites prédéfinies (w), et si oui, l'exécution (24) d'une communication radio (6) avec l'unité embarquée (7).

2. Procédé selon la revendication 1, **caractérisé en ce que** l'unité embarquée (7) émet périodiquement son information de direction de déplacement (20).

3. Procédé selon la revendication 1, **caractérisé en ce que** l'unité embarquée (7) transmet son information de direction de déplacement (20) lorsqu'elle détecte une balise radio (1) dans son voisinage.

4. Procédé selon la revendication 3, **caractérisé en ce que** la balise radio (1) émet (13) périodiquement des demandes de communication (13'), et **en ce que** ladite détection de la balise radio (1) est effectuée par la réception (14) d'une demande de communication (13') dans l'unité embarquée (7).

5. Procédé selon l'une quelconque des revendications 1 à 4, **caractérisé en ce que** les limites prédéfinies (w) sont un ou plusieurs secteurs angulaires (wₐ, w_{b}) de points cardinaux.

6. Procédé selon l'une quelconque des revendications 1 à 5, **caractérisé en ce que** l'on emploie une antenne omnidirectionnelle pour l'émission (13) de la demande de communication (13') et pour l'exécution (24) de la communication radio (6) dans la balise radio (1).

7. Procédé selon l'une quelconque des revendications 1 à 6, **caractérisé en ce que** l'unité embarquée (7) détermine en plus sa position (p) actuelle et la transmet à la balise radio (1), et **en ce qu'**il est vérifié en plus dans la balise radio (1) si la position (p) ainsi reçue est située également dans des limites prédéfinies (a), et la communication radio (6) est exécutée uniquement si cela est également satisfait.

8. Procédé selon l'une quelconque des revendications 1 à 7, **caractérisé en ce que** la balise radio (1) détermine la position (p) actuelle de l'unité embarquée (7) et qu'il est vérifié en plus si la position (p) ainsi déterminée est située dans des limites prédéfinies (a), et la communication radio (6) est exécutée uniquement si cela est également satisfait.

9. Procédé selon l'une quelconque des revendications 1 à 8, **caractérisé en ce que** l'unité embarquée (7) transmet conjointement avec l'information de direction de déplacement (20) un indicatif radio univoque (OBU-ID) qui est employé pour l'adressage de l'unité embarquée (7) dans la communication radio (6).

10. Procédé selon l'une quelconque des revendications 1 à 9, **caractérisé en ce que** la direction de déplacement (hd) et, le cas échéant, la position (p) de l'unité embarquée (7) sont déterminées à l'aide d'un récepteur de radionavigation par satellites (12) disposé dans l'unité embarquée (7).

11. Procédé selon l'une quelconque des revendications 1 à 10, **caractérisé en ce que** la demande de communication (13') et l'information de direction de déplacement (20) sont transmises sous forme de messages selon la norme WAVE.

12. Procédé selon l'une quelconque des revendications 1 à 11, **caractérisé en ce que** la balise radio (1) et l'unité embarquée (7) font partie d'un système de péage autoroutier et que la communication radio (6) est employée pour taxer une utilisation de routes par l'unité embarquée (7).

13. Balise radio équipée d'un émetteur-récepteur servant à la communication radio avec des unités embarquées de véhicules passant, **caractérisée en ce qu'**elle est conçue pour recevoir par radio (21) d'une unité embarquée (7) une information (20) indiquant une direction de déplacement (hd) actuelle de celle-ci et pour vérifier (23) si la direction de déplacement (hd) est située dans des limites prédéfinies (w), et uniquement si c'est le cas, pour exécuter la communication radio (6) avec l'unité embarquée (7).

14. Balise radio selon la revendication 13, **caractérisée en ce que** les limites prédéfinies (w) sont un secteur angulaire (wₐ, w_{b}) de points cardinaux.

15. Balise radio selon la revendication 13 ou 14, **caractérisée en ce qu'**elle a une antenne omnidirectionnelle pour ladite réception radio (21) et pour ladite communication radio (6).

16. Balise radio selon l'une quelconque des revendications 13 à 15, **caractérisée en ce qu'**elle est conçue pour déterminer (22) la position (p) actuelle de l'unité embarquée (7) et pour vérifier en plus (23) si la position (p) ainsi déterminée est située dans des limites prédéfinies (a), et pour exécuter la communication radio (6) uniquement si cela est également satisfait.

17. Balise radio selon l'une quelconque des revendications 13 à 16, **caractérisée en ce qu'**elle émet (13) périodiquement des demandes de communication (13') afin de demander à des unités embarquées (7) dans son voisinage d'envoyer par radio (19) leur direction de déplacement (hd).

18. Balise radio selon l'une quelconque des revendications 13 à 17, **caractérisée en ce qu'**elle emploie un indicatif radio (OBU-ID) de l'unité embarquée (7), reçu avec l'information de direction de déplacement (20), afin d'adresser la communication radio (6) à cette unité embarquée (7).

19. Unité embarquée à monter dans un véhicule, équipée d'un émetteur-récepteur (11) pour la communication radio (6) avec des balises radio (1) sur son trajet ainsi que d'un processeur (10) et d'un dispositif (12) de détermination de sa direction de déplacement (hd), **caractérisée en ce qu'**elle est conçue pour déterminer (17) sa direction de déplacement (hd) actuelle en cas de détection d'une balise radio (1) dans son voisinage et pour transmettre à la balise radio (1) une information de direction de déplacement (20) relative à sa direction de déplacement actuelle.

20. Unité embarquée selon la revendication 19, **caractérisée en ce qu'**elle est conçue pour détecter la balise radio (1) par la réception (14) d'une demande de communication (13') de la balise radio (1).

21. Unité embarquée selon la revendication 19 ou 20, **caractérisée en ce qu'**elle a un indicatif radio univoque (OBU-ID) qu'elle transmet conjointement avec l'information de direction de déplacement (20).

22. Unité embarquée selon l'une quelconque des revendications 19 à 21, **caractérisée en ce qu'**elle comporte en outre un dispositif (12) servant à déterminer sa position (p) et est conçue pour transmettre également sa position (p) conjointement avec l'information de direction de déplacement (20).

23. Unité embarquée selon l'une quelconque des revendications 19 à 22, **caractérisée en ce que** le dispositif (12) servant à déterminer la direction de déplacement (hd) et/ou la position (p) est un récepteur de radionavigation par satellites.

24. Unité embarquée selon l'une quelconque des revendications 19 à 23, **caractérisée en ce que** l'émetteur-récepteur (11) fonctionne selon la norme WAVE et qu'il transmet l'information de direction de déplacement (20) à la suite d'un message VST.
